(19) Europäisches Patentamt / European Patent Office / Office européen des brevets

(11) **EP 4 414 058 A1**

(12) **EUROPEAN PATENT APPLICATION**
published in accordance with Art. 153(4) EPC

(43) Date of publication:
**14.08.2024 Bulletin 2024/33**

(21) Application number: **22898753.3**

(22) Date of filing: **25.07.2022**

(51) International Patent Classification (IPC):
*B01D 67/00* (2006.01)  *B01D 71/26* (2006.01)
*H01M 50/403* (2021.01)  *H01M 50/417* (2021.01)

(52) Cooperative Patent Classification (CPC):
**B01D 67/00; B01D 71/26; H01M 50/403;**
**H01M 50/417**

(86) International application number:
**PCT/KR2022/010879**

(87) International publication number:
**WO 2023/096068 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.11.2021 KR 20210165977**

(71) Applicants:
• **W-Scope Korea Co., Ltd.**
  **Cheongju-si, Chungcheongbuk-do 28122 (KR)**
• **W-Scope Chungju Plant Co., Ltd.**
  **Daesowon-myeon**
  **Chingju-si, Chungcheongbuk-do**
  **27461 (KR)**

(72) Inventors:
• **PARK, Chang Dae**
  **28115 Chungcheongbuk-do (KR)**
• **KIM, Jeong Rae**
  **03454 Seoul (KR)**
• **LEE, Bom Yi**
  **17883 Gyeonggi-do (KR)**
• **KIM, Kyoung Won**
  **27917 Chungcheongbuk-do (KR)**
• **KIM, Byung Hyun**
  **28121 Chungcheongbuk-do (KR)**
• **YOON, Kyung SEok**
  **28761 Chungcheongbuk-do (KR)**

(74) Representative: **BCKIP Part mbB**
  **Siegfriedstraße 8**
  **80803 München (DE)**

(54) **SEPARATOR AND METHOD FOR MANUFACTURING SAME**

(57)  One aspect of the present invention provides a separator that includes a porous support and a hydrophilic polymer applied to the surface of the porous support through a solution including the hydrophilic polymer and a solvent, and satisfies the following Equation, and a method of manufacturing the same:

<Equation>
$$0.015 \leq (C{*}D)/(A{*}B) \leq 0.65$$

in the above equation, A is a thickness ($\mu$m) of the porous support, B is an air permeability (Gurley, seconds/100 ml) of the porous support, C is a porosity (% by volume) of the porous support, and D is a content (% by weight) of the hydrophilic polymer in the solution.

EP 4 414 058 A1

**Description**

[Technical field]

The present invention relates to a separator and a method of manufacturing the same, and more specifically, to a separator for a lithium secondary battery with improved electrolyte impregnability and a method of manufacturing the same.

[Background Art]

Lithium secondary batteries are widely used as power sources for various electrical products that require miniaturization and weight reduction, such as smart phones, laptops, and tablet PCs, and as the fields of application thereof have expanded to smart grids and medium-to-large batteries for electric vehicles, the development of lithium secondary batteries having a large capacity, a long lifespan, and high stability is required.

As a means for achieving the above-mentioned object, research and development is being actively carried out on separators formed with micropores that separate a positive electrode and a negative electrode to prevent an internal short circuit and allow lithium ions to move smoothly in a charging and discharging process, especially, a microporous separator using a polyolefin such as polyethylene which is advantageous for pore formation by thermally induced phase separation, is economical and easily satisfies the physical properties required for separators.

Polyolefin-based separators, which have been conventionally widely used, have problems with poor heat resistance and mechanical strength, and to compensate for this, a technology for coating the surface of the separator with a heat-resistant layer including ceramic particles was proposed. However, the heat-resistant layer still faces significant technical challenges related to air permeability and conductivity (resistance), which are factors that have a very important impact on the performance of the separator. That is, when a heat-resistant layer including ceramic particles is formed on the surface of a porous substrate, although the heat resistance of the separator is improved, the ceramic particles included in the heat-resistant layer close the pores formed in the porous substrate, thereby reducing the air permeability of the separator, as a result, the ion migration path between the positive electrode and the negative electrode is greatly reduced, resulting in a significant decrease in the charging and discharging performance of the secondary battery. Additionally, as the heat-resistant layer is continuously exposed to the electrolyte inside the battery, ceramic particles may be partially and continuously detached from the porous substrate, and in this case, the heat resistance of the separator may also gradually decrease.

Meanwhile, a lithium secondary battery has a structure in which a non-aqueous electrolyte including a lithium salt is impregnated in an electrode assembly with a porous separator interposed between the positive electrode and the negative electrode, each of which has an active material applied to an electrode current collector.

Lithium secondary batteries are manufactured by alternately stacking positive and negative electrodes, manufacturing an electrode assembly with a separator interposed between the positive and negative electrodes, then inserting the electrode assembly into a battery case in the form of a can or pouch of a certain size and shape, and finally injecting an electrolyte. At this time, the electrolyte permeates between the positive electrode, the negative electrode, and the separator by capillary force. However, due to the nature of the materials, since the positive electrode, the negative electrode, and the separator are hydrophobic, whereas the electrolyte is hydrophilic, considerable time and difficult process conditions are required to improve the electrolyte impregnability or wettability of the electrode and the separator. Accordingly, there are limitations in achieving and improving electrolyte impregnability and the productivity of the process in a balanced manner.

In order to improve such electrolyte impregnability, methods such as injecting the electrolyte at high temperature or injecting the electrolyte under pressure or reduced pressure are used, but there are problems such as the existing electrode assembly and electrolyte being deformed by heat, causing internal short circuits, and the like. In addition, since the above process is performed after accommodating the electrode assembly in the battery case together with the electrolyte, the electrolyte impregnability of the electrode assembly may be uneven, and in particular, in the case of a jelly-roll type electrode assembly, there is a problem that the lifespan of the battery is shortened due to non-uniformity of impregnability occurring between the winding center and the outer portion.

[Disclosure]

[Technical Problem]

The present invention is intended to solve the problems of the related art described above, and the purpose of the present invention is to provide a separator that is capable of achieving improved electrolyte impregnability and the productivity of a process in a balanced manner, and a method of manufacturing the same.

[Technical Solution]

One aspect of the present invention provides a separator that includes a porous support and a hydrophilic polymer applied to a surface of the porous support through a solution including the hydrophilic polymer and a solvent, and satisfies the following Equation:

$$<\text{Equation}>$$
$$0.015 \leq (C*D)/(A*B) \leq 0.65$$

in the above equation, A is a thickness ($\mu$m) of the porous support, B is an air permeability (Gurley, seconds/100 ml) of the porous support, C is a porosity (% by volume) of the porous support, and D is a content (% by weight) of the hydrophilic polymer in the solution.

In one embodiment, the porous support may have a thickness of 1 to 30 $\mu$m.

In one embodiment, the porous support may have a porosity of 40 to 70% by volume.

In one embodiment, the porous support may include one selected from the group consisting of polyethylene, polypropylene, polybutylene, polymethyl pentene, ethylene vinyl acetate, ethylene butyl acrylate, ethylene ethyl acrylate, and a combination of two or more thereof.

In one embodiment, the hydrophilic polymer may include one selected from the group consisting of ethylene vinyl alcohol, polyvinyl alcohol, polyacrylic acid, a polyoxyethylene-polyoxypropylene block copolymer, polyethylene glycol, polyethylene oxide, polyvinylpyrrolidone, polyvinyl acetal, polyvinyl butyral, a cellulose derivative, glycerol, and a combination of two or more thereof.

In one embodiment, a content of the hydrophilic polymer in the solution may be 0.05 to 3% by weight.

In one embodiment, the solvent may include one selected from the group consisting of water, N-methyl-2-pyrrolidone (NMP), acetone, N,N-dimethylformamide (DMF), dimethyl sulfoxide (DMSO), cyclohexyl-pyrrolidinone (CHP), N-dodecyl-pyrrolidone (N12P), benzyl benzoate, N-octyl-pyrrolidone (N8P), dimethyl-imidazolidinone (DMEU), cyclohexanone, dimethylacetamide (DMA), N-methyl formamide (NMF), bromobenzene, chloroform, chlorobenzene, benzonitrile, quinoline, benzyl ether, ethanol, isopropyl alcohol, methanol, butanol, 2-ethoxyethanol, 2-butoxyethanol, 2-methoxypropanol, tetrahydrofuran (THF), ethylene glycol, pyridine, N-vinylpyrrolidone, methyl ethyl ketone, alpha-terpineol, formic acid, ethyl acetate, acrylonitrile, and a combination of two or more thereof.

In one embodiment, a length change rate in a machine direction (MD) from immediately after dropping electrolyte droplets onto a surface of the separator until 3 minutes have elapsed may be 80% or more.

In one embodiment, a length change rate in a transverse direction (TD) from immediately after dropping the electrolyte droplets onto a surface of the separator until 3 minutes have elapsed may be 80% or more.

Another aspect of the present invention provides a method of manufacturing a separator, including: (a) preparing a porous support; and (b) preparing a solution including a hydrophilic polymer and a solvent and applying the solution to a surface of the porous support.

[Advantageous Effects]

In the separator according to one aspect of the present invention, hydrophilicity can be imparted by applying a hydrophilic polymer to a hydrophobic polyolefin-based separator, and the productivity of the process for applying the hydrophilic polymer, the hydrophilicity of the separator, and the resulting electrolyte impregnability can be achieved in a balanced manner by deriving and combining variables to implement the thickness, air permeability and porosity of the porous support constituting the separator and the concentration of the solution including the hydrophilic polymer while optimizing a preset level of electrolyte impregnability.

The effect of the present invention is not limited to the above-described effects, and it should be understood to include all effects that can be inferred from the configurations described in the detailed description or claims of the present invention.

[Modes of the Invention]

Hereinafter, the present invention will be described. However, the present invention may be implemented in several different forms, and thus is not limited to the embodiments described herein.

Throughout the specification, when a part is "connected" to another part, this includes not only the case where they are "directly connected" but also the case where they are "indirectly connected" with another member interposed therebetween. In addition, when a part is said to "include" a component, this means that other components may be further included, not excluded, unless specifically stated otherwise.

The separator according to one aspect of the present invention may include a porous support and a hydrophilic polymer applied to the surface of the porous support through a solution including the hydrophilic polymer and a solvent, and satisfy the following Equation:

<Equation>

$$0.015 \leq (C^*D)/(A^*B) \leq 0.65$$

in the above equation, A is a thickness ($\mu$m) of the porous support, B is an air permeability (Gurley, seconds/100 ml) of the porous support, C is a porosity (% by volume) of the porous support, and D is a content (% by weight) of the hydrophilic polymer in the solution.

The porous support is hydrophobic, but hydrophilicity may be imparted by applying a certain amount of the hydrophilic polymer to the porous support. In this case, the separator may achieve the productivity of the process for applying the hydrophilic polymer, the hydrophilicity of the separator, and the resulting electrolyte impregnability in a balanced manner by deriving and combining variables to implement the thickness (A), air permeability (B) and porosity (C) of the porous support and the concentration of the solution including the hydrophilic polymer, that is, the content (D) of the hydrophilic polymer in the solution while optimizing the required level of electrolyte impregnability.

A value of (C*D)/(A*B) according to the above Equation may be 0.015 to 0.65, preferably 0.02 to 0.6, and more preferably 0.02 to 0.4. When the value of (C*D)/(A*B) according to the above Equation is less than 0.015, it is impossible to impart the necessary level of hydrophilicity and resulting electrolyte impregnability to the porous support, and when the above value is greater than 0.65, some of the hydrophilic polymer may close the pores of the porous support, thereby increasing resistance and deteriorating the electrochemical properties of the battery.

A thickness of the porous support may be 1 to 30 $\mu$m, preferably 3 to 25 $\mu$m, and more preferably 5 to 20 $\mu$m. When the thickness of the porous support is less than 1 $\mu$m, the mechanical properties and heat resistance of the separator may be reduced, and when the thickness is greater than 30 $\mu$m, resistance increases, and thus not only may the electrochemical properties of the battery deteriorate, but the productivity of the process required to introduce the hydrophilic polymer into the porous support may also decrease.

The porous support may have an air permeability (Gurley) of 40 seconds to 300 seconds/100 ml, preferably 50 seconds to 200 seconds/100 ml. When the air permeability of the porous support is less than 40 seconds/100 ml, the mechanical properties and heat resistance of the separator may be reduced, and when the air permeability is greater than 300 seconds/100 ml, resistance increases, and thus not only may the electrochemical properties of the battery deteriorate, but the productivity of the process required to introduce the hydrophilic polymer into the porous support may also decrease.

A porosity of the porous support may be 40 to 70% by volume, preferably 45 to 70% by volume, and more preferably 50 to 60% by volume. Generally, the porosity of a polyolefin-based porous separator for lithium secondary batteries is about 30 to 50% by volume, preferably about 30 to 40% by volume, but the area of the surface and/or internal pores to which the hydrophilic polymer can be applied may be expanded by increasing the porosity of the porous support beyond that described above, and the larger the area of the portion to which the hydrophilic polymer is applied, the more improved electrolyte impregnability may be. When the porosity of the porous support is less than 40% by volume, resistance increases, and thus not only may the electrochemical properties of the battery deteriorate, but the productivity of the process required to introduce the hydrophilic polymer into the porous support may also decrease, and when the porosity is more than 70% by volume, the mechanical properties and heat resistance of the separator may be reduced.

The porous support may include one selected from the group consisting of polyethylene, polypropylene, polybutylene, polymethyl pentene, ethylene vinyl acetate, ethylene butyl acrylate, ethylene ethyl acrylate, and a combination of two or more thereof, preferably, polyolefin resins such as polyethylene and polypropylene, and more preferably, polyethylene, but is not limited thereto.

The hydrophilic polymer may be applied to the surface of the porous support and the surface of pores formed inside and/or outside the porous support through the solution to impart hydrophilicity to the porous support. A content of the hydrophilic polymer in the solution may be 0.05 to 3% by weight, preferably 0.1 to 2% by weight, and more preferably 0.5 to 2% by weight. When the content of the hydrophilic polymer in the solution is less than 0.05% by weight, it is impossible to impart the necessary level of hydrophilicity and the resulting electrolyte impregnability to the porous support, and when the content is more than 3% by weight, some of the hydrophilic polymer may close the pores of the porous support, thereby increasing resistance and deteriorating the electrochemical properties of the battery.

The hydrophilic polymer may be one selected from the group consisting of ethylene vinyl alcohol, polyvinyl alcohol, polyacrylic acid, a polyoxyethylene-polyoxypropylene block copolymer, polyethylene glycol, polyethylene oxide, polyvinylpyrrolidone, polyvinyl acetal, polyvinyl butyral, a cellulose derivative, glycerol, and a combination of two or more thereof, preferably, ethylene vinyl alcohol, polyvinyl alcohol and/or polyacrylic acid, and more preferably, ethylene vinyl alcohol, but is not limited thereto. A content of ethylene units in the ethylene vinyl alcohol may be 10 to 60 mol%, preferably 20 to 50 mol%, and more preferably 25 to 40 mol%.

The solution may further include a solvent to appropriately dissolve the hydrophilic polymer. The solvent may be one selected from the group consisting of water, N-methyl-2-pyrrolidone (NMP), acetone, N,N-dimethylformamide (DMF), dimethyl sulfoxide (DMSO), cyclohexyl-pyrrolidinone (CHP), N-dodecyl-pyrrolidone (N12P), benzyl benzoate, N-octyl-pyrrolidone (N8P), dimethyl-imidazolidinone (DMEU), cyclohexanone, dimethylacetamide (DMA), N-methyl formamide (NMF), bromobenzene, chloroform, chlorobenzene, benzonitrile, quinoline, benzyl ether, ethanol, isopropyl alcohol, methanol, butanol, 2-ethoxyethanol, 2-butoxyethanol, 2-methoxypropanol, tetrahydrofuran (THF), ethylene glycol, pyridine, N-vinylpyrrolidone, methyl ethyl ketone, alpha-terpineol, formic acid, ethyl acetate, acrylonitrile, phenol, and a combination of two or more thereof, preferably, DMSO and/or isopropyl alcohol, and more preferably, when the hydrophilic polymer is ethylene vinyl alcohol, the solvent may be DMSO, which has excellent selective and specific solubility and impregnability into the porous support. A concentration of DMSO in the solvent may be substantially about 100%, but is not limited thereto.

A length change rate in a machine direction (MD) from immediately after dropping electrolyte droplets onto the surface of the separator until 3 minutes have elapsed may be 80% or more, preferably 90% or more, and more preferably 95% or more. When the longest length in the machine direction (MD) immediately after dropping the electrolyte droplets onto the surface of the separator is MD1, and the longest length in the machine direction (MD) when 3 minutes have elapsed therefrom is MD2, the length change rate may be calculated by the following Equation 1:

<Equation 1>

$$\text{Machine direction (MD) length change rate (\%)} = (MD2-MD1)/(MD1)*100$$

A length change rate in a transverse direction (TD) from immediately after dropping electrolyte droplets onto the surface of the separator until 3 minutes have elapsed may be 80% or more, preferably 90% or more, and more preferably 95% or more. When the longest length in the transverse direction (TD) immediately after dropping the electrolyte droplets onto the surface of the separator is TD1, and the longest length in the transverse direction (TD) when 3 minutes have elapsed therefrom is TD2, the length change rate may be calculated by the following Equation 2:

<Equation 2>

$$\text{Transverse direction (TD) length change rate (\%)} = (TD2-TD1)/(TD1)*100$$

The electrolyte may be one selected from the group consisting of ethylene carbonate (EC), propylene carbonate (PC), diethyl carbonate (DEC), dimethyl carbonate (DMC), ethyl methyl carbonate (EMC), and a combination of two or more thereof, preferably propylene carbonate (PC), but is not limited thereto.

When the electrolyte is propylene carbonate (PC), when the length change rate in the machine direction (MD) and the transverse direction (TD) is less than 80%, it can be evaluated that the required level of electrolyte impregnability cannot be achieved.

A ratio of the length change rate in the machine direction (MD) to the length change rate in the transverse direction (TD) of the electrolyte droplet may be greater than 1.0. That is, the length change rate in the machine direction (MD) of the electrolyte droplet may be greater than the length change rate in the transverse direction (TD). In addition, the ratio of the length change rate in the machine direction (MD) to the length change rate in the transverse direction (TD) of the electrolyte droplet may be 1.1 or less, preferably 1.05 or less, and more preferably 1.03 or less. When the ratio of the length change rate in the machine direction (MD) to the length change rate in the transverse direction (TD) of the electrolyte droplet is more than 1.1, impregnation of the electrolyte into the separator may be uneven depending on the direction, which may deteriorate the electrochemical properties of the battery.

The separator may be manufactured by a method including: (a) preparing a porous support; and (b) preparing a solution including a hydrophilic polymer and a solvent, and applying the solution to the surface of the porous support.

The physical properties, types, effects, and the like of the porous support, the hydrophilic polymer, and the solvent are the same as described above.

In step (b), a solution including the hydrophilic polymer and the solvent may be prepared, and the solution may be applied to the surface of the porous support. The application may be done by dip coating, spray coating, roll coating, bar coating, or a combination of two or more thereof, preferably dip coating, that is, impregnation or immersion, but it is not limited to this.

The time required for application of the solution may be adjusted within the range of about 0.5 minutes to 48 hours, preferably about 0.5 to 10 minutes, and more preferably about 1 to 5 minutes depending on thickness, air permeability, porosity of the porous support, and concentration of the solution. When the application time is less than 0.5 minutes, the required level of hydrophilicity cannot be imparted, and when the time exceeds 48 hours, the productivity of the process for imparting hydrophilicity may be significantly reduced.

Meanwhile, after step (b), the method may further include (c) treating and washing the porous support with a solvent such as ethanol, water, or methylene chloride and then drying the washed porous support. The solvent used for the washing may preferably be ethanol in consideration of the external physical properties of the separator and the time required for drying, but is not limited thereto. That is, when the solvent is ethanol, the time required for subsequent drying can be shortened, and defects generated on the surface of the dried separator may be minimized to ensure appropriate external physical properties.

Hereinafter, examples of the present invention will be described in more detail.

Example 1-1

A porous support with a thickness of 9 μm, an air permeability of 50 seconds/100 ml (Gurley), and a porosity of 60% by volume was prepared. Ethylene vinyl alcohol (EVOH, Kuraray Co., Ltd., EVAL, PE-32mol%) was added to a dimethyl sulfoxide (DMSO) solvent and stirred at 80 °C for 1 hour to prepare a solution with an ethylene vinyl alcohol content of 0.5% by weight.

After the porous support was immersed in the solution for 30 seconds, excess solution remaining on both sides of the porous support was removed using a silicone blade. The porous support was washed by immersing it in ethanol for 60 seconds, then placed in an oven preheated to 60 °C and dried for 1 minute to manufacture a separator.

Example 1-2

A separator was manufactured in the same manner as in Example 1-1, except that the content of ethylene vinyl alcohol in the solution was changed to 0.75% by weight.

Example 1-3

A separator was manufactured in the same manner as in Example 1-1, except that the content of ethylene vinyl alcohol in the solution was changed to 1% by weight.

Example 1-4

A separator was manufactured in the same manner as in Example 1-1, except that the content of ethylene vinyl alcohol in the solution was changed to 3% by weight.

Comparative Example 1-1

A separator was manufactured in the same manner as in Example 1-1, except that the content of ethylene vinyl alcohol in the solution was changed to 5% by weight.

The manufacturing conditions of the separators according to the above Examples and Comparative Example are shown in Table 1 below.

- Thickness (μm): The thickness of the porous support was measured using a micro-thickness meter.
- Air permeability (Gurley, sec/100 ml): Using Asahi Seiko's Gurley meter (Densometer) EGO2-5 model, the time for 100 ml of air to pass through the porous support was measured at a measurement pressure of 0.025 MPa.
- Porosity (%): According to ASTM F316-03, the porosity of the porous support was measured using PMI's Capillary Porometer.

Table 1

| Classification | Thickness (A) | Air permeability (B) | Porosity (C) | EVOH content (D) | Immersion time (t, minutes) | (C*D)/ (A*B) |
|---|---|---|---|---|---|---|
| Example 1-1 | 9 | 50 | 60 | 0.5 | 0.5 | 0.067 |
| Example 1-2 | 9 | 50 | 60 | 0.75 | 0.5 | 0.100 |
| Example 1-3 | 9 | 50 | 60 | 1 | 0.5 | 0.133 |
| Example 1-4 | 9 | 50 | 60 | 3 | 0.5 | 0.400 |

(continued)

| Classification | Thickness (A) | Air permeability (B) | Porosity (C) | EVOH content (D) | Immersion time (t, minutes) | (C*D)/(A*B) |
|---|---|---|---|---|---|---|
| Comparative Example 1-1 | 9 | 50 | 60 | 5 | 0.5 | 0.667 |

Experimental Example 1

The electrolyte impregnability of the separators manufactured in the above Examples and Comparative Example was measured by the following method. A propylene carbonate (PC) solution was used as the electrolyte, the size of the droplet (MD1, TD1) immediately after adding 2 $\mu$l of the PC solution to the surface of the separator in a dropwise manner and the size of the spread droplet (MD2, TD2) after 3 minutes were measured along the machine direction (MD) and transverse direction (TD), and the results are shown in Table 2 below.

[Table 2]

| Classification | MD1 (mm) | TD1 (mm) | MD2 (mm) | TD2 (mm) | Change rate (MD, %) | Change rate (TD, %) | Electrolyte Impregnability |
|---|---|---|---|---|---|---|---|
| Example 1-1 | 5 | 3.8 | 9.57 | 7.26 | 91.4 | 91.1 | Excellent |
| Example 1-2 | 5 | 3.8 | 9.65 | 7.31 | 93.0 | 92.4 | Excellent |
| Example 1-3 | 5 | 3.8 | 9.81 | 7.42 | 96.2 | 95.3 | Excellent |
| Example 1-4 | 5 | 3.8 | 9.93 | 7.51 | 98.6 | 97.6 | Excellent |
| Comparative Example 1-1 | 5 | 3.8 | 9.98 | 7.58 | 99.6 | 99.5 | Excellent |

Referring to Table 2, both the Examples and Comparative Example were evaluated as having excellent electrolyte impregnability, but in the case of the separator according to Comparative Example 1-1, an excess of impregnated and coated EVOH closed the pores of the separator, resulting in decreased air permeability and ionic conductivity.

Example 2-1

A porous support with a thickness of 20 $\mu$m, an air permeability of 180 seconds/100 ml (Gurley), and a porosity of 50% by volume was prepared. Ethylene vinyl alcohol (EVOH, Kuraray Co., Ltd., EVAL, PE-32mol%) was added to a dimethyl sulfoxide (DMSO) solvent, and stirred at 80 °C for 1 hour to prepare a solution with an ethylene vinyl alcohol content of 1.5% by weight.
After the porous support was immersed in the solution for 30 seconds, an excess of solution remaining on both sides of the porous support was removed using a silicone blade. The porous support was washed by immersing it in ethanol for 60 seconds, then placed in an oven preheated to 60 °C and dried for 1 minute to manufacture a separator.

Example 2-2

A separator was manufactured in the same manner as in Example 2-1, except that the content of ethylene vinyl alcohol in the solution was changed to 2% by weight.

Example 2-3

A separator was manufactured in the same manner as in Example 2-1, except that the porous support was immersed in the solution for 1 minute.

Example 2-4

A separator was manufactured in the same manner as in Example 2-2, except that the porous support was immersed in the solution for 1 minute.

Comparative Example 2-1

A separator was manufactured in the same manner as in Example 2-1, except that the content of ethylene vinyl alcohol in the solution was changed to 1% by weight.

Comparative Example 2-2

A separator was manufactured in the same manner as in Comparative Example 2-1, except that the porous support was immersed in the solution for 3 minutes.

Comparative Example 2-3

A separator was manufactured in the same manner as in Comparative Example 2-1, except that the porous support was immersed in the solution for 5 minutes.

Comparative Example 2-4

A separator was manufactured in the same manner as in Comparative Example 2-1, except that the porous support was immersed in the solution for 10 minutes.

The manufacturing conditions of the separators according to the above Examples and Comparative Examples are shown in Table 3 below.

[Table 3]

| Classification | Thickness (A) | Air permeability (B) | Porosity (C) | EVOH content (D) | Immersion time (t, minutes) | (C*D)/ (A*B) |
|---|---|---|---|---|---|---|
| Example 2-1 | 20 | 180 | 50 | 1.5 | 0.5 | 0.021 |
| Example 2-2 | 20 | 180 | 50 | 2 | 0.5 | 0.028 |
| Example 2-3 | 20 | 180 | 50 | 1.5 | 1 | 0.021 |
| Example 2-4 | 20 | 180 | 50 | 2 | 1 | 0.028 |
| Comparative Example 2-1 | 20 | 180 | 50 | 1 | 0.5 | 0.014 |
| Comparative Example 2-2 | 20 | 180 | 50 | 1 | 3 | 0.014 |
| Comparative Example 2-3 | 20 | 180 | 50 | 1 | 5 | 0.014 |
| Comparative Example 2-4 | 20 | 180 | 50 | 1 | 10 | 0.014 |

Experimental Example 2

The electrolyte impregnability of the separators prepared in the Examples and Comparative Examples was measured in the same manner as in Experimental Example 1, and the results are shown in Table 4 below.

[Table 4]

| Classification | MD1 (mm) | TD1 (mm) | MD2 (mm) | TD2 (mm) | Change rate (MD, %) | Change rate (TD, %) | Electrolyte impregnability |
|---|---|---|---|---|---|---|---|
| Example 2-1 | 5 | 3.8 | 9.06 | 6.85 | 81.2 | 80.3 | Excellent |
| Example 2-2 | 5 | 3.8 | 9.37 | 7.04 | 87.4 | 85.3 | Excellent |
| Example 2-3 | 5 | 3.8 | 9.18 | 6.97 | 83.6 | 83.4 | Excellent |
| Example 2-4 | 5 | 3.8 | 9.42 | 7.15 | 88.4 | 88.2 | Excellent |

(continued)

| Classification | MD1 (mm) | TD1 (mm) | MD2 (mm) | TD2 (mm) | Change rate (MD, %) | Change rate (TD, %) | Electrolyte impregnability |
|---|---|---|---|---|---|---|---|
| Comparative Example 2-1 | 5 | 3.8 | 8.14 | 6.02 | 62.8 | 58.4 | Poor |
| Comparative Example 2-2 | 5 | 3.8 | 8.58 | 6.25 | 71.6 | 64.5 | Poor |
| Comparative Example 2-3 | 5 | 3.8 | 8.79 | 6.58 | 75.8 | 73.2 | Poor |
| Comparative Example 2-4 | 5 | 3.8 | 8.94 | 6.71 | 78.8 | 76.6 | Poor |

The foregoing description of the present invention is for illustrative purposes, and it will be understood by those skilled in the art that embodiments can be easily modified into other specific forms without changing the spirit and essential properties of the present invention. Therefore, it should be understood that the embodiments described above are illustrative in all respects and not restrictive. For example, each component described as a single type may be implemented in a dispersed form, and likewise components described as distributed may be implemented in a combined form.

The scope of the present invention is indicated by the following claims, and all changes or modifications derived from the meaning and scope of the claims and their equivalents should be construed as being included in the scope of the present invention.

**Claims**

1. A separator comprising:

   a porous support; and
   a hydrophilic polymer applied to a surface of the porous support through a solution including the hydrophilic polymer and a solvent,
   wherein the separator satisfies the following Equation,

$$<\text{Equation}>$$
$$0.015 \leq (C*D)/(A*B) \leq 0.65$$

   here,

   A is a thickness ($\mu$m) of the porous support,
   B is an air permeability (Gurley, seconds/100 ml) of the porous support,
   C is a porosity (% by volume) of the porous support, and
   D is a content (% by weight) of the hydrophilic polymer in the solution.

2. The separator of claim 1, wherein the porous support has a thickness of 1 to 30 $\mu$m.

3. The separator of claim 1, wherein the porous support has a porosity of 40 to 70% by volume.

4. The separator of claim 1, wherein the porous support includes one selected from the group consisting of polyethylene, polypropylene, polybutylene, polymethyl pentene, ethylene vinyl acetate, ethylene butylacrylate, ethylene ethyl acrylate, and a combination of two or more thereof.

5. The separator of claim 1, wherein the hydrophilic polymer includes one selected from the group consisting of ethylene vinyl alcohol, polyvinyl alcohol, polyacrylic acid, a polyoxyethylene-polyoxypropylene block copolymer, polyethylene glycol, polyethylene oxide, polyvinylpyrrolidone, polyvinyl acetal, polyvinyl butyral, a cellulose derivative, glycerol, and a combination of two or more thereof.

**6.** The separator of claim 1, wherein a content of the hydrophilic polymer in the solution is 0.05 to 3% by weight.

**7.** The separator of claim 1, wherein the solvent includes one selected from the group consisting of water, N-methyl-2-pyrrolidone (NMP), acetone, N,N-dimethylformamide (DMF), dimethyl sulfoxide (DMSO), cyclohexyl-pyrrolidinone (CHP), N-dodecyl-pyrrolidone (N12P), benzyl benzoate, N-octyl-pyrrolidone (N8P), dimethyl-imidazolidinone (DMEU), cyclohexanone, dimethylacetamide (DMA), N-methyl formamide (NMF), bromobenzene, chloroform, chlorobenzene, benzonitrile, quinoline, benzyl ether, ethanol, isopropyl alcohol, methanol, butanol, 2-ethoxyethanol, 2-butoxyethanol, 2-methoxypropanol, tetrahydrofuran (THF), ethylene glycol, pyridine, N-vinylpyrrolidone, methyl ethyl ketone, alpha-terpineol, formic acid, ethyl acetate, acrylonitrile, and a combination of two or more thereof.

**8.** The separator of claim 1, wherein a length change rate in a machine direction (MD) from immediately after dropping electrolyte droplets onto a surface of the separator until 3 minutes have elapsed is 80% or more.

**9.** The separator of claim 1, wherein a length change rate in a transverse direction (TD) from immediately after dropping electrolyte droplets onto a surface of the separator until 3 minutes have elapsed is 80% or more.

**10.** A method of manufacturing the separator of any one of claims 1 to 9, comprising:

(a) preparing a porous support; and
(b) preparing a solution including a hydrophilic polymer and a solvent and applying the solution to a surface of the porous support.

# EP 4 414 058 A1

| | | |
|---|---|---|
| **INTERNATIONAL SEARCH REPORT** | International application No. | |
| | **PCT/KR2022/010879** | |

**A. CLASSIFICATION OF SUBJECT MATTER**

**B01D 67/00**(2006.01)i; **B01D 71/26**(2006.01)i; **H01M 50/403**(2021.01)i; **H01M 50/417**(2021.01)i

According to International Patent Classification (IPC) or to both national classification and IPC

**B. FIELDS SEARCHED**

Minimum documentation searched (classification system followed by classification symbols)

B01D 67/00(2006.01); C08J 5/22(2006.01); H01M 10/0525(2010.01); H01M 10/36(2006.01); H01M 2/14(2006.01); H01M 2/16(2006.01); H01M 50/40(2021.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 다공성(porous), 친수성 고분자(hydrophilic polymer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0052800 A (LG CHEM, LTD.) 14 May 2015 (2015-05-14)<br>See claims 1 and 8; and paragraphs [0101], [0132] and [0133]. | 1-10 |
| Y | KR 10-2010-0028009 A (LG CHEM, LTD.) 11 March 2010 (2010-03-11)<br>See claim 1; and paragraph [0052]. | 1-10 |
| A | KR 10-2011-0026186 A (KOREA INSTITUTE OF INDUSTRIAL TECHNOLOGY) 15 March 2011 (2011-03-15)<br>See claims 1-11. | 1-10 |
| A | KR 10-2017-0068979 A (LG CHEM, LTD.) 20 June 2017 (2017-06-20)<br>See entire document. | 1-10 |
| A | KR 10-2020-0021435 A (LG CHEM, LTD.) 28 February 2020 (2020-02-28)<br>See entire document. | 1-10 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 November 2022** | **03 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

Form PCT/ISA/210 (patent family annex) (July 2022)

| INTERNATIONAL SEARCH REPORT Information on patent family members | | | | International application No. PCT/KR2022/010879 | | |
|---|---|---|---|---|---|---|
| Patent document cited in search report | | Publication date (day/month/year) | Patent family member(s) | | | Publication date (day/month/year) |
| KR 10-2015-0052800 | A | 14 May 2015 | CN | 105659410 | A | 08 June 2016 |
| | | | CN | 105659410 | B | 04 December 2018 |
| | | | EP | 3026733 | A1 | 01 June 2016 |
| | | | EP | 3026733 | A4 | 04 January 2017 |
| | | | JP | 2016-534531 | A | 04 November 2016 |
| | | | JP | 6373387 | B2 | 15 August 2018 |
| | | | KR | 10-1666045 | B1 | 13 October 2016 |
| | | | TW | 201530861 | A | 01 August 2015 |
| | | | TW | I557968 | B | 11 November 2016 |
| | | | US | 10505167 | B2 | 10 December 2019 |
| | | | US | 2016-0204406 | A1 | 14 July 2016 |
| | | | WO | 2015-069045 | A1 | 14 May 2015 |
| KR 10-2010-0028009 | A | 11 March 2010 | CN | 102171856 | A | 31 August 2011 |
| | | | CN | 102171856 | B | 27 January 2016 |
| | | | EP | 2333876 | A2 | 15 June 2011 |
| | | | EP | 2333876 | A4 | 26 November 2014 |
| | | | EP | 2333876 | B1 | 03 August 2016 |
| | | | JP | 2012-502426 | A | 26 January 2012 |
| | | | JP | 5689800 | B2 | 25 March 2015 |
| | | | KR | 10-1093858 | B1 | 13 December 2011 |
| | | | US | 2012-0034509 | A1 | 09 February 2012 |
| | | | US | 2015-0357619 | A1 | 10 December 2015 |
| | | | US | 9142819 | B2 | 22 September 2015 |
| | | | US | 9960400 | B2 | 01 May 2018 |
| | | | WO | 2010-027203 | A2 | 11 March 2010 |
| | | | WO | 2010-027203 | A3 | 24 June 2010 |
| KR 10-2011-0026186 | A | 15 March 2011 | KR | 10-1094267 | B1 | 20 December 2011 |
| KR 10-2017-0068979 | A | 20 June 2017 | KR | 10-2228625 | B1 | 15 March 2021 |
| KR 10-2020-0021435 | A | 28 February 2020 | None | | | |